# FASCICULE DE BREVET EUROPEEN

(11) **EP 4 313 480 B1**
(45) Date de publication et mention de la délivrance du brevet: **18.12.2024**
(21) Numéro de dépôt: 22717217.8
(22) Date de dépôt: 21.03.2022
(51) Int. Cl.: B23P 15/00, B23P 15/04, B23P 15/02, B22F 10/66, B22F 5/00, B22F 10/60, B33Y 40/20, B23B 31/00, B24B 31/06, B24B 23/02, B24B 49/00

(54) **PROCÉDÉ DE FABRICATION D'UNE PIÈCE EN ALLIAGE MÉTALLIQUE POUR UNE TURBOMACHINE**
VERFAHREN ZUR HERSTELLUNG EINES METALLLEGIERUNGSTEILS FÜR EINEN TURBINENMOTOR
METHOD FOR MANUFACTURING A METAL ALLOY PART FOR A TURBINE ENGINE

(30) Priorité: 26.03.2021 FR 2103084
(43) Date de publication de la demande: 07.02.2024
(73) Titulaire: SAFRAN AIRCRAFT ENGINES, 75015 Paris (FR)
(72) Inventeur: TUREL, Arnaud, 77550 Moissy-Cramayel (FR); VOIRON, Mickaël, 77550 Moissy-Cramayel (FR)
(74) Mandataire: Gevers & Orès
(86) Numéro de dépôt international: PCT/FR2022/050509
(87) Numéro de publication internationale: WO 2022/200722

(56) Documents cités:
- WO-A1-2012/001324
- WO-A1-2015/055601
- FR-A1- 3 058 457
- US-A1- 2014 235 146
- US-A1- 2016 346 896

## Description

### Domaine technique de l'invention

La présente invention concerne un procédé de fabrication d'une pièce en alliage métallique pour une turbomachine d'aéronef, incluant une étape de fabrication additive par fusion laser sur lit de poudre.

### Arrière-plan technique

L'arrière-plan technique comprend notamment les documents WO-A1-2015/055601, FR-A1-3 058 457, WO-A1-2012/0013624, US-A1-2014/235146 et US-A1-2016/346896.

En raison de leur forte compétitivité en termes de coût de production, de cadence et d'efficacité de mise en oeuvre, les procédés de mise en forme par métallurgie des poudres et plus particulièrement par fabrication additive ont montré un très fort regain d'intérêt ces dernières années notamment dans le domaine aéronautique pour la fabrication de pièces d'une turbomachine d'aéronef.

Bien que ces procédés de fabrication permettent de réaliser des pièces de géométries complexes proches des cotes finies, les états de surface en sortie de procédé restent non acceptables. En effet, les niveaux de rugosité obtenus après fabrication additive sont souvent très grossiers et les rugosités Ra peuvent varier de 10 à 50 µm selon les stratégies de fabrication, le type de poudre utilisé, les conditions de fabrication mises en oeuvre et l'orientation des pièces lors de la construction. Ces rugosités élevées ont un impact négatif sur les propriétés mécaniques des pièces et sur les performances de la turbomachine notamment dans les zones de passage de flux d'air, comme c'est le cas des pièces comportant au moins une pale aérodynamique (aube, distributeur, redresseur, etc.).

Les pièces pour l'aéronautique, issues de la fabrication additive doivent donc être systématiquement parachevées principalement pour atteindre des niveaux de rugosité acceptables.

La fabrication additive est une méthode de fabrication apparue dans les années 1990. C'est une méthode de fabrication qui permet de fabriquer couche par couche, par ajout de matière, un objet physique à partir d'un fichier numérique. Ces procédés de fabrication permettent d'obtenir directement une pièce proche des cotes finies.

Des pièces d'une turbomachine d'aéronef, comme les redresseurs, peuvent être fabriquées avec la technologie de fusion laser sur lit de poudre autrement appelé « *Selective Laser Melting* » (SLM) ou *« Laser Beam Melting* » (LBM).

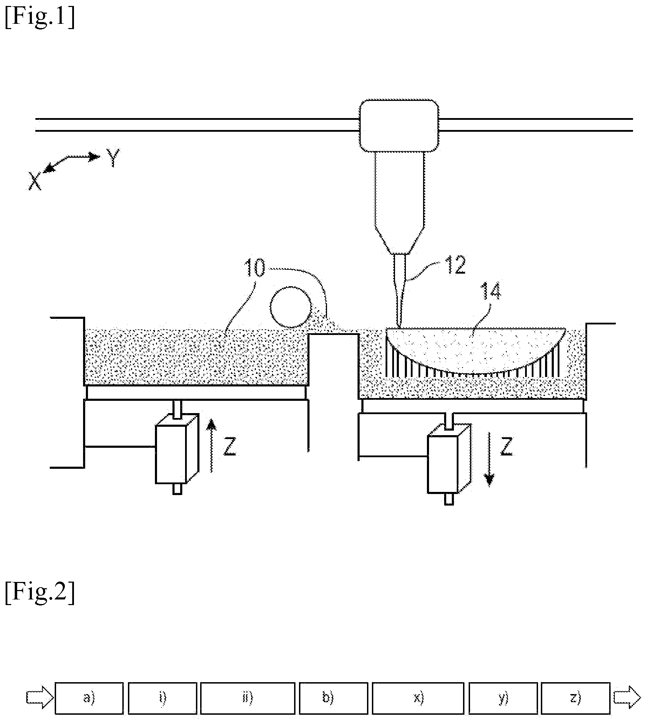

Cette technologie consiste en la fusion de lits de poudre 10 successifs par un laser 12 jusqu'à obtention de la pièce 14 (figure 1) et est bien connue de l'homme du métier spécialisé dans la fabrication additive de pièces aéronautiques.

Une épaisseur de poudre 10 (20 - 60 µm) est étalée et le laser 12 fusionne (suivant une stratégie de balayage définie) la poudre en suivant la géométrie de la pièce 14 à réaliser. La poudre non fusionnée est retirée et un nouveau lit de poudre 10 est étalé de façon à ce qu'un nouveau cycle de balayage laser puisse être effectué.

L'état de surface d'une pièce 14 réalisée par fabrication additive peut être amélioré par tribofinition. La tribofinition regroupe l'ensemble des procédés industriels d'usinage par abrasion permettant, par la mise en mouvement d'une composition abrasive autour d'une pièce dans une cuve, l'amélioration de la rugosité ou la microrugosité, l'ébavurage, le rayonnage, le brunissage, ou encore le décalaminage.

D'un point de vue scientifique, trois phénomènes peuvent être mis en jeu dans la tribofinition : l'abrasion (notamment pour la diminution de la rugosité, le cisaillement (notamment pour le rayonnage et l'ébavurage), et la percussion (notamment pour le brunissage).

Il existe plusieurs types d'installations de tribofinition parmi lesquelles :
a) le tonnelage : il s'agit d'une cuve qui est mise en rotation autour d'un axe horizontal et qui contient la composition abrasive et la pièce qui est fixe ou libre dans la cuve ;
b) les vibrateurs linéaire et circulaire : il s'agit d'une cuve vibrante mettant en mouvement la composition abrasive et contenant la pièce qui est également fixe ou mobile ;
c) la machine à force centrifuge : il s'agit d'une machine dans laquelle la composition abrasive est mise en mouvement par énergie cinétique dans une cuve, cette cuve comportant au fond un plateau tournant à grande vitesse ; la pièce étant libre dans la cuve ;
d) la smuritropie : il s'agit d'une machine dans laquelle la pièce est mise en mouvement épicycloïdal dans une cuve contenant la composition abrasive ; et
e) le *surf finishing* : il s'agit d'une cuve qui est mise en rotation autour d'un axe vertical et qui contient la composition abrasive et la pièce qui est fixe ou libre dans la cuve.

Dans le cadre du parachèvement de pièces issues de la fabrication additive, ces technologies ne suffisent pas notamment car elles ne permettent pas de baisser complètement des rugosités très fortes comme constatées sur pièces brutes de fabrication additive et ils ne permettent généralement pas de travailler dans des zones restreintes et difficiles d'accès. Ces procédés doivent donc être précédés d'autres procédés comme le polissage à la pâte abrasive, le sablage ou encore des procédés par voie chimique.

Un grand nombre de ces technologies doivent donc être combinées pour parachever des pièces issues de la fabrication additive avec des géométries complexes.

Il existe donc un besoin d'une solution de tribofinition qui permette de simplifier le procédé de fabrication d'une pièce aéronautique incluant une étape de fabrication additive par fusion laser sur lit de poudre.

### Résumé de l'invention

L'invention concerne, en accord avec la revendication 1, un procédé de fabrication d'une pièce en alliage métallique pour une turbomachine d'aéronef, ce procédé comprenant les étapes de :
a) réalisation d'une ébauche de la pièce par fabrication additive par fusion laser sur lit de poudre, et
b) usinage par abrasion de l'ébauche pour obtenir la pièce, cet usinage étant réalisé par tribofinition en immergeant l'ébauche dans une composition abrasive contenue dans une cuve soumise à un mouvement vibratoire,

la composition abrasive comprenant un élément abrasif formé par des particules d'alumine, un élément porteur formé par des particules de cuivre, et un liquide, et
l'étape b) comprenant un premier cycle de tribofinition de l'ébauche dans la composition abrasive, et au moins un cycle supplémentaire de tribofinition de l'ébauche au début de laquelle une partie ou l'intégralité de la composition abrasive est évacuée et remplacée par une nouvelle composition abrasive de même formulation, l'orientation de la pièce dans la cuve étant modifiée entre deux cycles successifs de tribofinition.

L'invention propose ainsi une composition abrasive spécifique pour la tribofinition d'une ébauche métallique obtenue par fabrication additive. Parmi les technologies décrites ci-dessus, l'invention utilise la tribofinition vibratoire ou par vibrations.

Dans la présente demande, on entend par un élément abrasif, un élément qui a une fonction abrasive, c'est-à-dire une fonction de traitement de surface par abrasion d'une pièce en vue d'en modifier la rugosité et en particulier d'en réduire la rugosité dans le contexte de l'invention. Un élément abrasif a en général une dureté supérieure à celle de la pièce à traiter, et donc supérieure à celle d'un alliage métallique dans le contexte de l'invention. Selon l'invention, l'élément abrasif est formé par des particules d'alumine (Al₂O₃). L'alumine est un matériau céramique avec une dureté et une stabilité chimique élevées.

Dans la présente demande, on entend par un élément porteur, un élément qui a pour fonction de favoriser la création d'un flux de la composition abrasive dans la cuve. L'élément porteur est indépendant et séparé de l'élément abrasif. Lors du mouvement vibratoire de la cuve, l'élément porteur est mis en mouvement dans la cuve et entraîne avec lui l'élément abrasif. Il se forme ainsi un flux de la composition abrasive à l'intérieur de la cuve qui permet à l'élément abrasif de circuler sur et autour de la pièce et d'assurer son rôle d'usinage par abrasion. Un élément porteur a en général une densité supérieure à celle de l'élément abrasif. Selon l'invention, l'élément porteur est formé par des particules de cuivre. Le cuivre a une densité et une dureté telles qu'il présente l'avantage de ne pas rebondir sur la pièce lorsqu'il se déplace dans la cuve.

Le liquide de la composition abrasive permet de fluidifier le flux de cette composition dans la cuve et de faciliter le nettoyage de la pièce et l'évacuation de la matière retirée de la pièce par abrasion. Il permet en outre de lubrifier la pièce et d'éviter une montée en température due aux phénomènes de friction.

Des modes de réalisation préférentiels du procédé selon l'invention sont définis dans les revendications dépendantes 2 à 15. Par ailleurs, selon d'autres modes de réalisation qui ne font pas l'objet de revendications dépendantes:
-- les particules d'alumine ont un diamètre moyen ou une taille moyenne compris(e) entre 5 et 100µm, et de préférence entre 10 et 70µm ; elles peuvent avoir une forme quelconque ;
-- les particules de cuivre ont un diamètre moyen ou une taille moyenne compris(e) entre 0,5 et 5mm, et de préférence entre 1 et 4mm ; elles peuvent avoir une forme quelconque ; elles peuvent par exemple se présenter sous forme de plaquettes parallélépipédiques et avoir une épaisseur de l'ordre de 1mm par exemple ;
- la composition abrasive comprend de préférence entre 0,1 et 0,2% en poids d'élément abrasif, et de préférence entre 96 et 98%, en poids d'élément porteur, le reste de la composition abrasive étant formé par le liquide ;
-- le ratio R1 = Q1 / Q2 est compris entre 200 et 2000, et de préférence entre 500 et 1000, avec Q1 le poids de l'élément porteur dans la composition abrasive et Q2 le poids de l'élément abrasif dans la composition abrasive ;
-- le ratio R2 = Q1 / Q3 est compris entre 10 et 500, et de préférence entre 30 et 300, avec Q1 le poids de l'élément porteur dans la composition abrasive et Q3 le poids du liquide dans la composition abrasive ;
--le ratio R3 = Q3 / Q2 est compris entre 5 et 50, et de préférence entre 10 et 30, avec Q3 le poids du liquide dans la composition abrasive et Q2 le poids de l'élément abrasif dans la composition abrasive ;
-- l'ébauche est entièrement immergée dans la composition abrasive à l'étape b) ;

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue très schématique d'une installation de fabrication additive par fusion laser sur lit de poudre, et illustre une première étape du procédé selon l'invention ;
[Fig.2] la figure 2 est un organigramme représentant un mode de réalisation d'un procédé selon l'invention de fabrication d'une pièce en alliage métallique pour une turbomachine d'aéronef ;
[Fig.3] la figure 3 est une vue très schématique d'une cuve vibrante contenant une composition abrasive dans laquelle est immergée la pièce à traiter, et illustre une autre étape du procédé selon l'invention ;
[Fig.4] la figure 4 est une vue à plus grande échelle de la pièce et du support de cette pièce dans la cuve, et illustre la direction d'un flux abrasif au niveau de la pièce à traiter dans la cuve ;
[Fig.5] la figure 5 est une vue schématique en perspective d'un outillage de fixation de la pièce et de maintien de cette pièce dans la cuve, la pièce étant ici un redresseur de turbomachine d'aéronef et étant maintenue dans une première position ; et
[Fig.6] la figure 6 est une autre vue schématique en perspective de l'outillage et de la pièce de la figure 5, une partie de l'outillage ayant subi une rotation autour d'un axe horizontal pour maintenir la pièce dans une seconde position.

### Description détaillée de l'invention

La figure 1 a été brièvement décrite dans ce qui précède et illustre une étape a) d'un procédé selon l'invention de fabrication additive d'une pièce en alliage métallique pour une turbomachine d'aéronef.

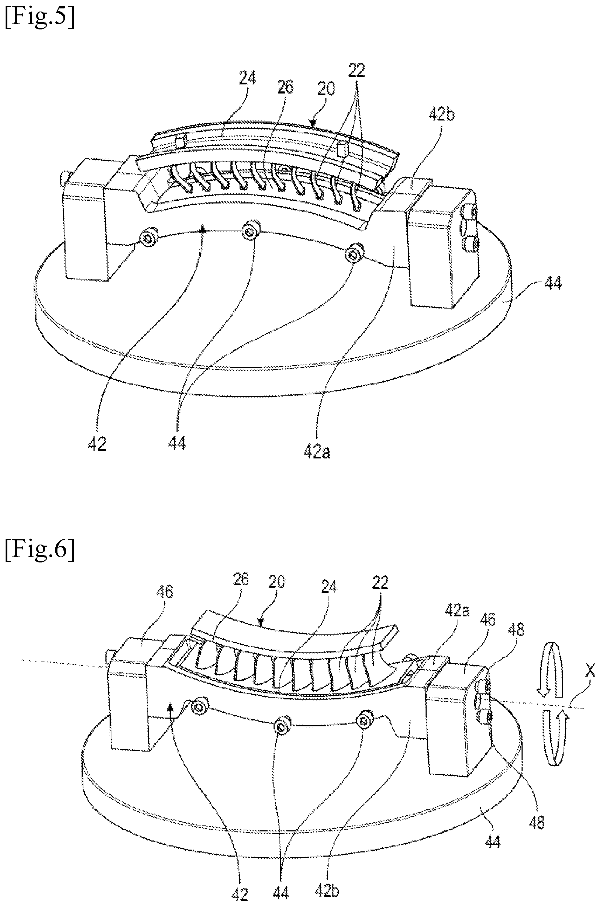

La pièce à fabriquer comprend par exemple au moins une pale aérodynamique et par exemple plusieurs pales aérodynamiques adjacentes. C'est le cas par exemple d'un redresseur 20, tel qu'illustré aux figures 5 et 6, qui comprend plusieurs pales 22 adjacentes dont les extrémités sont reliées à des viroles 24, 26.

Un redresseur 20 de turbomachine a une forme annulaire autour d'un axe de révolution et la pièce représentée aux figures 5 et 6 est en fait un secteur de redresseur, c'est-à-dire une partie angulaire de redresseur. La sectorisation d'un redresseur permet notamment de faciliter sa fabrication et son montage. Le secteur de redresseur des figures 5 et 6 forme un ensemble monobloc qui est réalisé par le procédé selon l'invention.

La figure 2 représente un mode de réalisation non limitatif du procédé selon l'invention, avec des étapes obligatoires et des étapes facultatives.

Les deux étapes obligatoires sont les étapes de :
a) réalisation d'une ébauche 30 de la pièce par fabrication additive par fusion laser sur lit de poudre, au moyen de l'installation 16 de la figure 1, et
b) usinage par abrasion de l'ébauche 30 pour obtenir la pièce (et par exemple le redresseur 20 dans le cas particulier précité), cet usinage étant réalisé par tribofinition en immergeant l'ébauche 30 dans une composition abrasive 32 contenue dans une cuve 34 soumise à un mouvement vibratoire.

L'étape a) de fabrication additive ne sera pas détaillée dans ce qui suit car il est considéré qu'elle fait partie des connaissances générales de l'homme du métier dans le domaine en question.

L'ébauche 30 est de préférence réalisée à partir d'une poudre dans un alliage à base de nickel (par exemple en Inconel 718), titane ou fer. Contrairement aux dessins qui montrent une ébauche 30 sous forme d'éprouvette simple, l'ébauche peut avoir une forme complexe, comme illustré aux figures 5 et 6. L'ébauche 30 obtenue a une rugosité de surface importante qui est réduite grâce à l'étape b) de tribofinition.

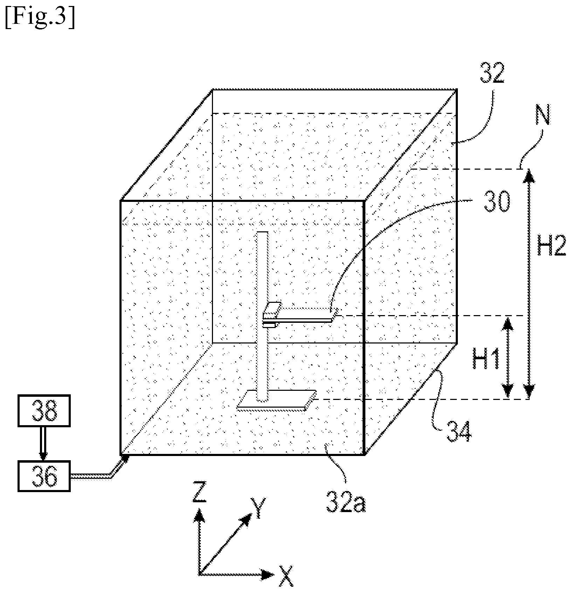

Cette tribofinition est réalisée au moyen d'une cuve 34 vibrante illustrée schématiquement à la figure 3. Cette cuve 34 vibrante a une forme générale quelconque et contient la composition abrasive 32 dans laquelle est immergée l'ébauche 30 à traiter. La cuve 34 a par exemple une forme cubique de 40cm de côté.

La cuve 34 fait partie d'une installation de tribofinition qui n'est pas représentée dans les dessins pour plus de clarté. L'installation comprend par exemple des moyens motorisés 36 configurés pour imposer un mouvement vibratoire à la cuve 32, ainsi que des moyens de contrôle 38 pour commander ces moyens motorisés. Cette installation est par exemple analogue à celle décrite dans le document US-A1-2014/235146.

Selon l'invention, la composition abrasive 32 contenue dans la cuve 34 comprend un élément abrasif formé par des particules d'alumine, un élément porteur formé par des particules de cuivre, et un liquide.

La composition abrasive 32 comprend de préférence entre 0,05 et 0,4% en poids d'élément abrasif, et entre 95 et 99 % en poids d'élément porteur, le reste de la composition abrasive étant formé par le liquide.

Le liquide de la composition abrasive comprend de préférence entre 2 et 8% en poids, et plus préférentiellement entre 4 et 5% en poids, d'additifs. Au-delà d'un certain taux d'additifs, il existe un risque de corrosion à chaud de la pièce si des traces résiduelles d'additifs restent sur la pièce en service (en vol).

Les particules d'alumine ont un diamètre moyen ou une taille moyenne compris(e) entre 5 et 100µm, et de préférence entre 10 et 70µm. Elles peuvent avoir une forme quelconque.

Les particules de cuivre ont un diamètre moyen ou une taille moyenne compris(e) entre 0,5 et 5mm, et de préférence entre 1 et 4mm. Elles peuvent avoir une forme quelconque et peuvent par exemple se présenter sous la forme de plaquettes parallélépipédiques.

On définit par Q1, Q2 et Q3, respectivement, le poids de l'élément porteur dans la composition abrasive 32, le poids de l'élément abrasif dans la composition abrasive 32, et le poids du liquide dans la composition abrasive 32. Les inventeurs ont constaté qu'une augmentation de la quantité d'élément abrasif dans la composition entraîne une amélioration de l'état de surface final de la pièce, et qu'une augmentation de la quantité d'élément porteur dans la composition entraîne également une amélioration de l'état de surface final de la pièce.

Avantageusement, le ratio :
- R1 = Q1 / Q2 est compris entre 200 et 2000, et de préférence entre 500 et 1000, et/ou
- R2 = Q1 / Q3 est compris entre 10 et 500, et de préférence entre 30 et 300, et/ou
- R3 = Q3 / Q2 est compris entre 5 et 50, et de préférence entre 10 et 30. Q1 est de préférence supérieur à 300Kg, en fonction de la capacité de la cuve.

Q2 est de préférence compris entre 300 et 600g.

Q3 est de préférence compris entre 3 et 10Kg, et plus préférentiellement entre 5 et 9Kg.

L'élément abrasif est par exemple celui commercialisé par la société SPM sous la dénomination TRI.AL^{®} 860 G.

L'élément porteur est par exemple pur à 99,9%. Il comprend donc pour l'essentiel du cuivre.

Le liquide de la composition abrasive 32 est de préférence une solution aqueuse contenant au moins un tensioactif, voire d'autres additifs. Le liquide peut être un mélange aqueux de produits commercialisés par la société SPM sous les dénominations Lucibril^{®} A320 R et FAM 521.

Le mouvement vibratoire est réalisé suivant les axes x, y et z. Ce mouvement vibratoire est par exemple réalisé à une fréquence comprise entre 30 et 60Hz, et de préférence entre 40 et 50Hz.

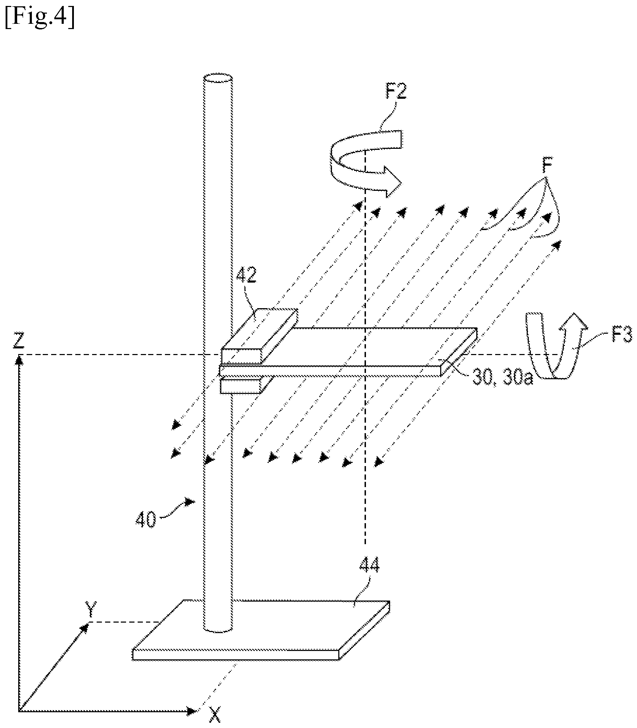

Ce mouvement vibratoire génère un déplacement de l'élément porteur et donc des particules de cuivre dans la cuve 34. Le déplacement des particules de cuivre entraîne un déplacement des particules d'alumine et donc l'ensemble des particules de la cuve se déplacent. La composition vibrante vibre donc dans les trois directions x, y et z dans la cuve et se déplace majoritairement dans une direction au sein de la cuve, ici le long de l'axe Y. Cette direction de déplacement est ici horizontale et parallèle à un fond 34a de la cuve 34 sur lequel est fixée l'ébauche 30. Le liquide permet de fluidifier ce déplacement et de former un flux abrasif dans la cuve 34, qui est représenté schématiquement par les doubles flèches F à la figure 4. Ce flux abrasif dépend donc du mouvement vibratoire de la cuve 34.

Les mouvements imposés à la cuve 34 peuvent être rectilignes, circulaires, etc. Les moyens motorisés 36 peuvent par exemple tourner en sens horaire ou antihoraire en alternant les deux modes. Cela a pour effet de changer le sens d'écoulement du flux abrasif F tout en gardant la même direction, et de rendre la tribofinition la plus homogène possible sur la pièce.

L'ébauche 30 est immergée dans la composition 32 et est de préférence totalement immergée dans la composition 32, comme cela est visible à la figure 3. L'ébauche 30 est située à une hauteur H1 dans la cuve 34 ou s'étend jusqu'à une hauteur maximale H1 dans la cuve.

La hauteur H1 est de préférence la plus faible possible de façon à ce que l'ébauche 30 soit située au plus près du fond de la cuve, ce qui permet d'améliorer les phénomènes d'abrasion lors de la tribofinition.

La hauteur H1 peut représenter au plus 30%, et de préférence au plus 15%, de la hauteur maximale H2 de la composition abrasive 32 dans la cuve.

H1 est de préférence comprise entre 5 et 10cm.

Autrement dit, il est préférable que le niveau supérieur N de la composition abrasive 32 dans la cuve 34 soit nettement au-dessus de l'ébauche 30 ou de son extrémité supérieure.

Le flux abrasif F permet de faire circuler l'élément abrasif au contact de l'ébauche 30 en vue de sa tribofinition. On comprend que l'ébauche 30 peut être positionnée dans la cuve 34 en fonction de la direction du flux F. A titre d'exemple, une surface plane 30a de l'ébauche 30 sera préférentiellement disposée parallèlement au flux F pour s'assurer que les particules d'alumine circulent sur cette surface et l'usent par frottement (figure 4). Les inventeurs ont de plus constaté que l'abrasion est meilleure lorsque la surface 30a à traiter est orientée vers le haut de la cuve.

L'orientation de l'ébauche 30 dans la cuve 34 est modifiée au cours de l'étape b) afin de s'assurer que toutes les surfaces de l'ébauche 30 soient bien traitées par tribofinition.

L'étape b) comprend au moins deux cycles de tribofinition. La durée d'un cycle de tribofinition dépend notamment de l'état de surface souhaitée de la pièce. Les inventeurs ont constaté qu'une augmentation de cette durée entraîne une amélioration de l'état de surface. A noter que à partir d'un certain temps de tribofinition, l'abrasion n'est plus aussi efficace qu'au début du cycle et l'état de surface ne s'améliore plus. Il peut alors être nécessaire de relancer un nouveau cycle de tribofinition.

La durée d'un cycle de tribofinition est au plus égale à 8h.

L'étape b) comprend par exemple un premier cycle de tribofinition de l'ébauche 30 dans la composition abrasive 32 lors duquel la cuve 34 est mise en mouvement vibratoire.

Les mouvements de la cuve 34 sont arrêtés et l'orientation de l'ébauche 30 dans la cuve 34 est modifiée, par exemple par une rotation de l'ébauche 30 autour d'un axe z vertical (flèche F2). Une quantité supplémentaire d'élément abrasif est de préférence ajoutée dans la cuve et une partie de la composition abrasive 32 est retirée ou évacuée de la cuve, ce qui permet de recycler cette composition et de s'assurer qu'elle conserve toujours de bonnes propriétés abrasives. L'intégralité de la composition abrasive peut être évacuée et remplacée par une nouvelle composition abrasive de même formulation. L'étape b) comprend alors un second cycle de tribofinition de l'ébauche 30 dans la composition abrasive 32 lors duquel la cuve 34 est mise en mouvement vibratoire.

Les mouvements de la cuve 34 sont arrêtés et l'orientation de l'ébauche 30 dans la cuve 34 peut être à nouveau modifiée, par exemple par une rotation de l'ébauche autour d'un axe x horizontal perpendiculaire aux axes y et z (flèche F3). Une quantité supplémentaire d'élément abrasif est de préférence à nouveau ajoutée dans la cuve 34 et une partie de la composition abrasive 32 peut être retirée ou évacuée de la cuve. L'intégralité de la composition abrasive peut être évacuée et remplacée par une nouvelle composition abrasive de même formulation. L'étape b) comprend alors un troisième cycle de tribofinition de l'ébauche 30 dans la composition abrasive 32 lors duquel la cuve est mise en mouvement vibratoire.

Le nombre de cycles de tribofinition n'est pas limité et dépend notamment de la forme de la pièce à traiter.

L'ébauche 30 est maintenue dans la cuve 34 par un outillage 40 qui est représenté très schématiquement aux figures 3 et 4. Cet outillage comprend des moyens 42 de fixation de l'ébauche 30 et des moyens 44 de fixation sur le fond 32 de la cuve 32. L'outillage 40 est en outre configuré pour autoriser les changements de positions et d'orientation de l'ébauche dans la cuve 32, comme évoqué dans ce qui précède.

Les figures 5 et 6 représentent un exemple plus concret de réalisation de l'outillage 40 dans le cadre du traitement par tribofinition d'un redresseur 20 ou secteur de redresseur.

Les moyens 44 de fixation au fond 34a de la cuve 34 comprennent ici un socle plan ferromagnétique qui est configuré pour être posé au fond et au centre de la cuve 34 et maintenu fixement par un champ électromagnétique, comme cela est expliqué dans le document US-A1-2014/235146. Les inventeurs ont en effet constaté que le positionnement optimal de la pièce est au centre de la cuve pour éviter à la pièce d'être dans une « zone morte », par exemple au voisinage d'un bord ou d'un coin de la cuve, au niveau de laquelle le flux abrasif peut être plus faible et donc la tribofinition peut être moins efficace.

Ce socle a ici une forme générale de disque pour être engagé et posé au fond d'une cuve 34 de forme générale cubique. Le socle est réalisé en matériau ferromagnétique pour être maintenu fixement au fond de la cuve uniquement par le champ magnétique. L'installation de tribofinition comprend alors des aimants ou analogues configurés pour générer un champ magnétique d'immobilisation du socle au fond de la cuve. Cette méthode de maintien de l'outillage 40 permet de ne pas avoir de moyens de fixation dans la cuve et au fond de la cuve et de ne pas gêner la circulation du flux F de composition abrasive dans la cuve.

En variante, l'outillage 40 pourrait être maintenu au fond de la cuve par des moyens mécaniques.

Les moyens 42 de fixation du redresseur 20 comprennent des mors de serrage. Ces mors de serrage peuvent être formés par deux pièces 42a, 42b serrées l'une contre l'autre par des moyens appropriés tels que des vis 44 par exemple.

Dans l'exemple représenté, le maintien du redresseur 20 se fait au niveau de l'une de ses viroles 24, 26. Les pièces 42a, 42b comprennent un premier côté conformé en arc de cercle convexe pour recevoir et serrer entre elles la virole interne 26 (figure 5). Les pièces 42a, 42b comprennent un second côté opposé conformé en arc de cercle concave pour recevoir et serrer entre elles la virole externe 24 (figure 5).

L'outillage comprend en outre des moyens 46 de liaison des mors au socle. Ces moyens de liaison 46 comprennent deux supports qui sont fixés sur une surface supérieure du socle, opposée au fond de la cuve, et entre lesquels s'étendent les moyens de fixation 42.

Les moyens de fixation 42 sont mobiles en rotation par rapport aux moyens de liaison 46 autour d'un axe, qui est l'axe x dans le cas de la figure 4. Les moyens de fixation 42 peuvent adopter une première position représentée à la figure 5 dans laquelle leur premier coté convexe est orienté vers le haut et reçoit la virole interne 26 du redresseur 20. Les moyens de fixation 42 peuvent adopter une seconde position représentée à la figure 6 dans laquelle leur second coté concave est orienté vers le haut et reçoit la virole externe 24 du redresseur 20. Le déplacement des moyens de fixation 42 entre ces deux positions permet donc de présenter le redresseur 42 dans deux positions autour de l'axe x, situées à 180° l'une de l'autre. Les moyens de fixation 42 peuvent être immobilisés dans une position particulière vis-à-vis des moyens de liaison 46 par des vis 48 ou analogues.

Le déplacement du redresseur autour de l'axe z peut être réalisé en arrêtant le champ magnétique, en tournant le socle dans la cuve d'un quart de tour autour de l'axe z, et en réactivant le champ magnétique.

L'outillage 40 est de préférence réalisé dans un matériau adapté pour résister à l'abrasion et à la corrosion lors de la tribofinition. Il est par exemple réalisé en acier inoxydable, nitruré ou bien recouvert d'un revêtement de protection en polymère.

Comme cela est schématiquement représenté dans l'organigramme de la figure 2, le procédé selon l'invention peut comprendre, entre les étapes a) et b), une étape i) de traitement thermique de l'ébauche, et/ou une étape ii) d'usinage de l'ébauche pour supprimer des supports qui sont créés lors de la fabrication additive à l'étape a). L'usinage à l'étape ii) peut être réalisé par EDM (acronyme de l'anglais *Electro Discharge Machining)*

Le procédé selon l'invention peut comprendre, après l'étape b), une étape x) de décontamination de la pièce par immersion de cette pièce dans un bain de décontamination, voire des étapes y) et z) successives de dégraissage et de ressuage de la pièce.

La décontamination de la pièce à l'étape x) est particulièrement avantageuse pour s'assurer que la pièce ne soit pas polluée par la composition abrasive et en particulier par les particules de cuivre qui peuvent rester accrochées sur la pièce. Ces particules de cuivre sont en effet susceptibles de générer une diffusion ou un relargage de Cuivre dans la pièce en fonctionnement moteur. Ces particules sont également susceptibles de masquer de potentielles criques de la pièce non détectables en fin de gamme de fabrication lors du contrôle par ressuage.

Le bain de décontamination comprend de préférence une solution aqueuse comportant au moins un acide tel que l'acide nitrique (HNO₃). L'acide a pour but de dissoudre le cuivre qui passe en solution et donc d'éliminer les particules de cuivre accrochées à la pièce. La solution aqueuse comprend par exemple 510ml/L de HNO₃ et la pièce peut être immergée dans le bain pendant une durée de 15 minutes par exemple.

## Revendications

1. Procédé de fabrication d'une pièce (14) en alliage métallique pour une turbomachine d'aéronef, ce procédé comprenant les étapes de :
a) réalisation d'une ébauche (30) de la pièce par fabrication additive par fusion laser sur lit de poudre, et
b) usinage par abrasion de l'ébauche pour obtenir la pièce, cet usinage étant réalisé par tribofinition en immergeant l'ébauche dans une composition abrasive (32) contenue dans une cuve (34) soumise à un mouvement vibratoire,
la composition abrasive comprenant un élément abrasif formé par des particules d'alumine, un élément porteur formé par des particules de cuivre, et un liquide, et
l'étape b) comprenant un premier cycle de tribofinition de l'ébauche (30) dans la composition abrasive, et au moins un cycle supplémentaire de tribofinition de l'ébauche (30) au début de laquelle une partie ou l'intégralité de la composition abrasive (32) est évacuée et remplacée par une nouvelle composition abrasive (32) de même formulation, l'orientation de la pièce dans la cuve étant modifiée entre deux cycles successifs de tribofinition.

2. Procédé selon la revendication 1, dans lequel la pièce (14) est réalisée en alliage à base de titane, nickel ou fer.

3. Procédé selon la revendication 1 ou 2, dans lequel la composition abrasive (32) comprend entre 0,05 et 0,4% en poids d'élément abrasif, et entre 95 et 99 % en poids d'élément porteur, le reste de la composition abrasive étant formé par le liquide.

4. Procédé selon l'une des revendications précédentes, dans lequel le liquide de la composition abrasive (32) est une solution aqueuse contenant au moins un tensioactif, voire d'autres additifs.

5. Procédé selon l'une des revendications précédentes, dans lequel le mouvement vibratoire est réalisé à une fréquence comprise entre 30 et 60Hz, et de préférence entre 40 et 50Hz.

6. Procédé selon l'une des revendications précédentes, dans lequel la pièce (14) comprend au moins une pale (22) aérodynamique et par exemple plusieurs pales aérodynamiques adjacentes et formant un ensemble monobloc appelé redresseur (20).

7. Procédé selon l'une des revendications précédentes, dans lequel la pièce (14) est maintenue dans la cuve (34) par un outillage (40) comportant des mors de serrage de la pièce et un socle plan ferromagnétique, ce socle étant posé au fond et au centre de la cuve (34) et maintenu fixement par un champ électromagnétique.

8. Procédé selon l'une des revendications précédentes, dans lequel il comprend, après l'étape b), une étape x) de décontamination de la pièce par immersion de cette pièce dans un bain de décontamination, voire des étapes y) et z) successives de dégraissage et de ressuage de la pièce.

9. Procédé selon la revendication précédente, dans lequel le bain de décontamination comprend une solution aqueuse comportant au moins un acide tel que l'acide nitrique.

10. Procédé selon l'une des revendications précédentes, dans lequel l'élément abrasif a une dureté supérieure à celle de la pièce à traiter.

11. Procédé selon l'une des revendications précédentes, dans lequel l'élément porteur a une densité supérieure à celle de l'élément abrasif.

12. Procédé selon l'une des revendications précédentes, dans lequel la composition abrasive comprend entre 1,8 et 3,9% en poids de liquide.

13. Procédé selon l'une des revendications précédentes, dans lequel l'ébauche est située à une hauteur dans la cuve ou s'étend jusqu'à une hauteur maximale dans la cuve qui représente au plus 30%, et de préférence au plus 15%, de la hauteur maximale de la composition abrasive dans la cuve.

14. Procédé l'une des revendications précédentes, dans lequel le mouvement vibratoire est réalisé suivant les trois axes d'un repère orthonormé.

15. Procédé l'une des revendications précédentes, dans lequel il comprend, entre les étapes a) et b), une étape i) de traitement thermique de l'ébauche, et/ou une étape ii) d'usinage de l'ébauche pour supprimer des supports de fabrication.

## Patentansprüche

1. Verfahren zur Herstellung eines Werkstücks (14) aus einer Metalllegierung für ein Turbotriebwerk eines Luftfahrzeugs, wobei das Verfahren die folgenden Schritte umfasst:
a) Ausführung eines Rohlings (30) des Werkstücks durch additive Fertigung mittels Laserschmelzen auf einem Pulverbett, und
b) Schleifbearbeitung des Rohlings, um das Werkstück zu erhalten, wobei diese Bearbeitung durch Gleitschleifen ausgeführt wird, indem der Rohling in eine Schleifmittelzusammensetzung (32) eingetaucht wird, die in einer Wanne (34) enthalten ist, der einer Vibrationsbewegung unterworfen wird,
wobei die Schleifmittelzusammensetzung ein aus Aluminiumoxidteilchen gebildetes Schleifelement, ein aus Kupferteilchen gebildetes Trägerelement und eine Flüssigkeit umfasst, und
wobei Schritt b) einen ersten Zyklus des Gleitschleifens des Rohlings (30) in der Schleifmittelzusammensetzung umfasst, und mindestens einen weiteren Zyklus des Gleitschleifens des Rohlings (30), an dessen Anfang ein Teil der oder die gesamte Schleifmittelzusammensetzung (32) abgezogen und durch eine neue Schleifmittelzusammensetzung (32) der gleichen Formulierung ersetzt wird, wobei die Ausrichtung des Werkstücks in der Wanne zwischen zwei aufeinanderfolgenden Gleitschleifzyklen geändert wird.

2. Verfahren nach Anspruch 1, wobei das Werkstück (14) aus einer Legierung auf Titan-, Nickel- oder Eisenbasis ausgeführt ist.

3. Verfahren nach Anspruch 1 oder 2, wobei die Schleifmittelzusammensetzung (32) zwischen 0,05 und 0,4 Gew.-% Schleifelement und zwischen 95 und 99 Gew.-% Trägerelement umfasst, wobei der Rest der Schleifmittelzusammensetzung durch die Flüssigkeit gebildet wird.

4. Verfahren nach einem der vorstehenden Ansprüche, wobei die Flüssigkeit der Schleifmittelzusammensetzung (32) eine wässrige Lösung ist, die mindestens ein Tensid oder sogar andere Zusatzstoffe enthält.

5. Verfahren nach einem der vorstehenden Ansprüche, wobei die Vibrationsbewegung bei einer Frequenz zwischen 30 und 60 Hz und vorzugsweise zwischen 40 und 50 Hz ausgeführt wird.

6. Verfahren nach einem der vorstehenden Ansprüche, wobei das Werkstück (14) mindestens ein aerodynamisches Blatt (22) und zum Beispiel mehrere aerodynamische Blätter umfasst, die aneinander angrenzen und eine Monoblockanordnung bilden, die als Gleichrichter (20) bezeichnet wird.

7. Verfahren nach einem der vorstehenden Ansprüche, wobei das Werkstück (14) in der Wanne (34) durch ein Werkzeug (40) gehalten wird, das Backen zum Einspannen des Werkstücks und einen flachen ferromagnetischen Sockel umfasst, wobei dieser Sockel auf den Boden und in die Mitte der Wanne (34) gelegt und durch ein elektromagnetisches Feld fest gehalten wird.

8. Verfahren nach einem der vorstehenden Ansprüche, wobei es nach Schritt b) einen Schritt x) zur Dekontamination des Werkstücks durch Eintauchen dieses Werkstücks in ein Dekontaminationsbad umfasst, oder sogar aufeinanderfolgende Schritte y) und z) zur Entfettung und zum Farbeindringen des Werkstücks.

9. Verfahren nach dem vorstehenden Anspruch, wobei das Dekontaminationsbad eine wässrige Lösung umfasst, die mindestens eine Säure wie Salpetersäure enthält.

10. Verfahren nach einem der vorstehenden Ansprüche, wobei das Schleifelement eine größere Härte als das zu behandelnde Werkstück aufweist.

11. Verfahren nach einem der vorstehenden Ansprüche, wobei das Trägerelement eine höhere Dichte als das Schleifelement aufweist.

12. Verfahren nach einem der vorstehenden Ansprüche, wobei die Schleifmittelzusammensetzung zwischen 1,8 und 3,9 Gew.-% Flüssigkeit umfasst.

13. Verfahren nach einem der vorstehenden Ansprüche, wobei der Rohling in einer Höhe in der Wanne angeordnet ist oder sich bis zu einer maximalen Höhe in der Wanne erstreckt, die höchstens 30 %, vorzugsweise höchstens 15 %, der maximalen Höhe der Schleifmittelzusammensetzung in der Wanne darstellt.

14. Verfahren nach einem der vorstehenden Ansprüche, wobei die Vibrationsbewegung entlang der drei Achsen eines orthonormierten Bezugssystems ausgeführt wird.

15. Verfahren nach einem der vorstehenden Ansprüche, wobei es zwischen den Schritten a) und b) einen Schritt i) der Wärmebehandlung des Rohlings umfasst, und/oder einen Schritt ii) der Bearbeitung des Rohlings, um Herstellungsträger zu entfernen.

## Claims

1. A method for manufacturing a metal alloy part (14) for an aircraft turbine engine, this method comprising the steps of:
a) producing a blank (30) of the part by additive manufacturing using laser fusion on a powder bed, and
b) abrasively machining the blank to obtain the part, this machining being carried out by vibratory finishing by immersing the blank in an abrasive composition (32) contained in a tank (34) subjected to a vibratory movement,
the abrasive composition comprising an abrasive element formed by alumina particles, a carrying element formed by copper particles, and a liquid, and
step b) comprising a first cycle of vibratory finishing the blank (30) in the abrasive composition, and at least one further cycle of vibratory finishing the blank (30) at the start of which some or all of the abrasive composition (32) is evacuated and replaced by a new abrasive composition (32) of the same formulation, the orientation of the part in the tank being changed between two successive cycles of vibratory finishing.

2. The method according to claim 1, wherein the part (14) is made of a titanium, nickel or iron-based alloy.

3. The method according to claim 1 or 2, wherein the abrasive composition (32) comprises between 0.05 and 0.4% by weight of abrasive element, and between 95 and 99% by weight of carrying element, the remainder of the abrasive composition being formed by the liquid.

4. The method according to one of the preceding claims, wherein the liquid of the abrasive composition (32) is an aqueous solution containing at least one surfactant and possibly other additives.

5. The method according to one of the preceding claims, wherein the vibratory movement is carried out at a frequency of between 30 and 60 Hz, and preferably between 40 and 50 Hz.

6. The method according to one of the preceding claims, wherein the part (14) comprises at least one aerodynamic blade (22) and, for example, several adjacent aerodynamic blades forming a monobloc assembly referred to as rectifier (20).

7. The method according to one of the preceding claims, wherein the part (14) is held in the tank (34) by a tooling (40) comprising jaws for clamping the part and a flat ferromagnetic base, this base being placed at the bottom and in the centre of the tank (34) and held fixedly by an electromagnetic field.

8. The method according to one of the preceding claims, wherein it comprises, after step b), a step x) of decontaminating the part by immersing this part in a decontamination bath, or successive steps y) and z) of degreasing and penetrant testing the part.

9. The method according to the preceding claim, wherein the decontamination bath comprises an aqueous solution comprising at least one acid such as nitric acid.

10. The method according to one of the preceding claims, wherein the abrasive element has a hardness greater than that of the part to be treated.

11. The method according to any of the preceding claims, wherein the carrying element has a higher density than the abrasive element.

12. The method according to any of the preceding claims, wherein the abrasive composition comprises between 1.8 and 3.9% by weight of liquid.

13. The method according to any of the preceding claims, wherein the blank is located at a height in the tank or extends to a maximum height in the tank which is at most 30%, and preferably at most 15%, of the maximum height of the abrasive composition in the tank.

14. The method of one of the preceding claims, wherein the vibratory movement is carried out along the three axes of an orthonormal reference frame.

15. The method of any of the preceding claims, wherein it comprises, between steps a) and b), a step i) of thermal treatment of the blank, and/or a step ii) of machining the blank to remove manufacturing supports.
